# EUROPEAN PATENT APPLICATION

(11) **EP 2 717 589 A2**
(43) Date of publication of application: **09.04.2014**
(21) Application number: 13180358.7
(22) Date of filing: 14.08.2013
(51) Int. Cl.: H04N 21/2362, H04N 21/434, H04N 21/81

(54) **Display device, set-top box and method of determining stereoscopic video content**

(30) Priority: 31.08.2012 KR 20120096756
(71) Applicant: Samsung Electronics Co., Ltd, Gyeonggi-do 443-742 (KR)
(72) Inventor: Kim, Mun Seok, Gyeonggi-do (KR); Nam, Kyung Chul, Gyeonggi-do (KR)
(74) Representative: Brandon, Paul Laurence

(57) **Abstract**

Exemplary embodiments disclose a method of determining whether an image received, or to be received, through a display device or a set-top box is stereoscopic video content, a display device and set-top box thereto. The method of determining stereoscopic video content includes receiving an EIT of future image content, extracting a plurality of events based on the EIT, detecting an event group, having different channel information and a same event identifier, among the extracted events, reading event information of events belonging to the event group to determine whether a stereoscopic program info descriptor is present in at least one event information of the events, and determining that the event group is an event group of stereoscopic video content, when the stereoscopic program info descriptor is present in the at least one event information of the events.

## Description

### BACKGROUND

### 1. Field

Exemplary embodiments relate to a method of determining whether an image received, or to be received, through a display device or a set-top box is stereoscopic video content, and a display device and set-top box for performing the method.

### 2. Description of the Related Art

The human eyes are spaced apart from each other by about 6 cm to 7 cm. Thus, images detected and recognized by the eyes are slightly different from each other. The human brain recognizes the difference to induce a stereoscopic effect.

A stereoscopic video is provided in such a way that a viewer may stereoscopically recognize an image reproduced, based on binocular parallax or an image, such as video. For example, a related art three-dimensional (3D) display apparatus outputs a left eye image and a right eye image on a display device using a predetermined method, and the left eye of the viewer recognizes the left eye image and the right eye recognizes the right eye image, such that the viewer may experience a stereoscopic effect.

In this case, there are various related art stereoscopic video reproduction methods, according to a method of outputting the left eye image and the right eye image, or a method of recognizing the left eye image and the right eye image by the right eyes and left eyes of the viewer. First, for example, related art stereoscopic video reproduction methods may be classified into a glass method and a non-glass method, according to whether the viewer requires separate glasses in order to view a stereoscopic video. The glass method is classified into a space division method, in which the aforementioned left eye image and right eye image overlap each other (e.g., anaglyph), or the left eye image and the right eye image are separated and coupled to each other (e.g., a polarized glass method) to display one image, and a time division method in which the left eye image and the right eye image cross each other to be displayed on a display device (e.g., a shutter glass method).

The non-glass method includes a method in which the left eye image and the right eye image are separately displayed to be respectively recognized by the left and right eyes, using a lenticular sheet or a barrier plate.

A related art 3D broadcast refers to broadcast provided in such a way that a viewer may realistically view stereoscopic image content, using such various stereoscopic video reproduction methods. In the related art 3D broadcast, an image stream of the left eye image and the right eye image, and a modulated transport stream for transport of a sound signal and various data added thereto are transmitted through a transmitter, such as an antenna tower. Next, a receiver installed in a display device or connected via a wired or wireless communication network receives and demodulates the transport stream. Then, the left eye image and the right eye image are output using the space division method or the time division method, such that the viewer may view a stereoscopic video.

### SUMMARY

An aspect of the exemplary embodiments may provide a method of determining whether various image content to be received and reproduced in the future is stereoscopic video content, and a display device and set-top box for performing the method.

In particular, whether a program to be broadcast in the future corresponds to three-dimensional (3D) broadcast, i.e., whether image content to be provided in the future is stereoscopic video content, but not whether currently provided image content corresponds to 3D broadcast, i.e., whether currently provided image content is stereoscopic video content, may be determined in a 3D broadcast method based on an advanced television system committee (ATSC) standard (hereinafter, referred to as an ATSC method).

A viewer may recognize whether or not a program to be broadcast in the future corresponds to 3D broadcast.

In addition, electronic program guide information (EPG) may be corrected by adding additional information regarding 3D broadcast to the EPG, such that the viewer may easily recognize whether future broadcast is general broadcast or 3D broadcast.

The viewer may determine stereoscopic video to be provided, in advance, to perform watch reservation or record reservation.

Additional aspects of the exemplary embodiments will be set forth in the detailed description which follows and, will be obvious from the description, or may be learned by practice of the exemplary embodiments.

In accordance with aspects of the exemplary embodiments, a display device, a set-top box (STB), and a method of determining stereoscopic video content may be determined.

In accordance with one aspect of the exemplary embodiments, a method of determining stereoscopic video content based on an event information table (EIT) related to image content includes receiving the EIT of future image content, extracting a plurality of events based on the EIT, detecting an event group, having different channel information and a same event identifier, among the extracted events, reading event information of events belonging to the event group to determine whether a stereoscopic program info descriptor is present in at least one event information of the events, and determining that the event group is an event group of stereoscopic video content when the stereoscopic program info descriptor is present in the at least event information of the events.

The event identifier may be at least one of an event title and an event time information (the event time information may contain, for example, an event start time, an event end time, or an event length). In other words, the event identifier may be any one or both of the event title and the event time information. Alternatively, the event identifier may be another event identifier for event identification.

The extracting may include extracting events having a same packet identifier (PID) by searching for the EIT.

The determining may include determining an event in which the stereoscopic program info descriptor is not present as a reference event reproduced as a reference image, among a plurality of events of the event group, and determining an event in which the stereoscopic program info descriptor is present as an additional event reproduced as an additional image, additionally used in the reference image, among the plurality of events of the event group.

The method may further include correcting electronic program guide information (EPG) or the received EIT, based on information regarding the determined stereoscopic video content.

In accordance with another aspect of the exemplary embodiments, a display device includes an event group detector configured to extract a plurality of events based on an event information table (EIT) of future image content, and configured to detect an event group, having different channel information and a same event identifier, among the extracted events; and a determination device configured to read event information of events belonging to the event group to determine whether a stereoscopic program info descriptor is present in at least one event information of the events, and configured to determine that the event group is an event group of stereoscopic video content, when the stereoscopic program info descriptor is present in the at least one event information of the events. The event identifier may be at least one of an event title and an event time information.

The event group detector may extract events having a same packet identifier (PID) by searching for the EIT.

The determination device may determine an event in which the stereoscopic program info descriptor is not present as a reference event reproduced as a reference image, among a plurality of events of the event group, and may determine an event in which the stereoscopic program info descriptor is present as an additional event, additionally used in the reference image, among the plurality of events of the event group.

The display device may further include an electronic program guide information (EPG) corrector configured to correct EPG, based on information regarding the determined stereoscopic video content or an EIT corrector configured to correct the received EIT, based on information regarding the determined stereoscopic video content.

In accordance with another aspect of the exemplary embodiments, a set-top box includes an event group detector configured to extract a plurality of events based on an event information table (EIT) of future image content, and configured to detect an event group, having different channel information and a same event identifier, among the extracted events, a determination device configured to read event information of events belonging to the event group to determine whether a stereoscopic program info descriptor is present in at least one event information of the events, and configured to determine that the event group is an event group of stereoscopic video content when the stereoscopic program info descriptor is present in the at least one event information of the events, and a transmitter configured to transmit information regarding the determined event group to a display device.

The event identifier may be at least one of an event title and an event time information.

The event group detector may extract events having a same packet identifier (PID) by searching for the EIT.

The determination device may determine an event in which the stereoscopic program info descriptor is not present as a reference event reproduced as a reference image, among a plurality of events of the event group, and may determine an event in which the stereoscopic program info descriptor is present as an additional event, additionally used in the reference image among the plurality of events of the event group.

In accordance with another aspect of the exemplary embodiments, a method of determining stereoscopic video content based on an event information table (EIT) related to image content in a transmission system includes extracting a plurality of events based on the EIT of future image content, detecting an event group, having different channel information and a same event identifier, among the extracted events, reading event information of events belonging to the event group to determine whether a stereoscopic program info descriptor is present in at least one event information of the events; determining that the event group is an event group of stereoscopic video content, when the stereoscopic program info descriptor is present in the at least one event information of the events; and transmitting information regarding the determined event group.

### BRIEF DESCRIPTION OF THE DRAWINGS

These and/or other aspects of the exemplary embodiments will become apparent and more readily appreciated from the following description of the embodiments, taken in conjunction with the accompanying drawings of which:
FIG. 1 is a conceptual diagram of three-dimensional (3D) television (TV) broadcast according to an embodiment;
FIG. 2 is a block diagram of the transmission system according to an embodiment;
FIG. 3 is a table of an example of an event information table (EIT) according to an embodiment;
FIG. 4 is a block diagram of a set-top box (STB) according to an embodiment;
FIG. 5 is a block diagram of a stereoscopic video content determination unit according to an embodiment;
FIG. 6 is a diagram of structures of a STB and a display device according to another embodiment;
FIG. 7 is a diagram of a structure of a display deceive according to another embodiment;
FIG. 8 is a flowchart of a 3D TV broadcast process according to an embodiment;
FIG. 9 is a flowchart of a method of determining stereoscopic image content according to an embodiment;
FIG. 10 is a flowchart of a process of detecting an event group in a method of determining stereoscopic video content according to an embodiment; and
FIG. 11 is a flowchart of a method of determining stereoscopic video content by detecting a stereoscopic program info descriptor in a method of determining stereoscopic video content according to an embodiment.

### DETAILED DESCRIPTION OF THE EXEMPLARY EMBODIMENTS

Reference will now be made in detail to the embodiments of the exemplary embodiments, examples of which are illustrated in the accompanying drawings.

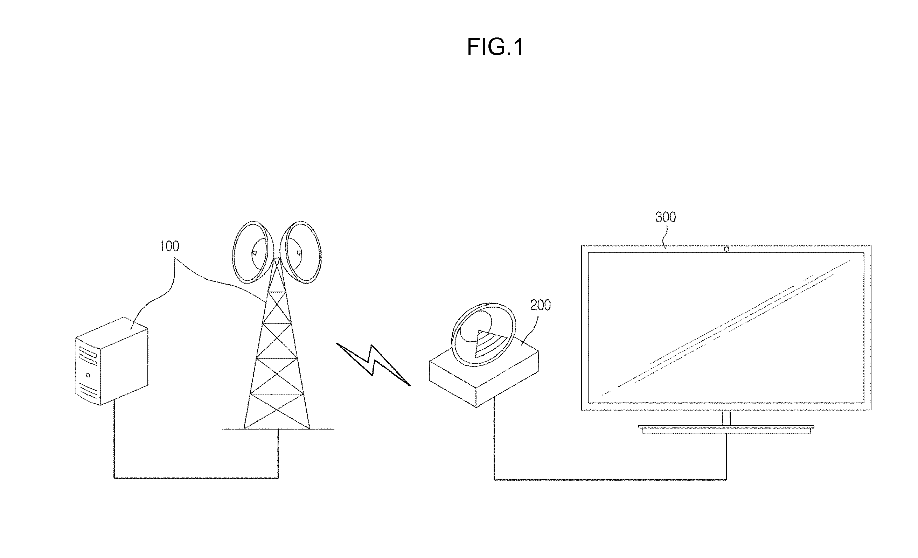

In order to describe the embodiments of the exemplary embodiments with reference to FIGS. 1 through 5, a transmission system, a set-top box, and a display device, for three-dimensional (3D) television (TV) broadcast, will be described with regard to an embodiment of the exemplary embodiments with reference to FIGS. 1 through 4.

Hereinafter, a transmission system, a set-top box, and a display device, for 3D TV broadcast, will be described with regard to an embodiment with reference to FIGS. 1 through 4.

FIG. 1 is a conceptual diagram of stereoscopic video broadcast according to an embodiment.

As shown in FIG. 1, according to the present embodiment, the 3D TV broadcast is performed by a transmission system 100, a receiver 200, and a display device 300 connected to the receiver 200.

Here, the transmission system 100 multiplexes a stereoscopic video signal produced for the 3D TV broadcast, a sound signal synchronized, and data regarding various information related to 3D programs to be broadcast, and transmits predetermined broadcast signals.

The receiver 200, e.g., a set-top box (STB) (hereinafter, referred to as the receiver 200 or the STB 200) receives the predetermined broadcast signals from the transmission system 100. According to other embodiments of the exemplary embodiments, the receiver 200 may perform demodulation and inverse multiplexing to separately obtain a stereoscopic video signal, a sound signal, and additional various data. Then, the receiver 200 may transmit the stereoscopic video signal and a command related to a stereoscopic video to the display device 300, such that the display device 300 may display the stereoscopic video on a screen. As necessary, the STB 200 may process data regarding various information to organize electronic program guide information (EPG), and may transmit the EPG to the display device 300.

The display device 300 refers to an image or image/sound output device to reproduce a stereoscopic video, e.g., a 3D TV. The display device 300 controls the stereoscopic video signal and the sound signal, and outputs the stereoscopic video, in addition to a sound, as necessary. Thus, a viewer may view the stereoscopic video.

According to an embodiment of the exemplary embodiments, the display device 300 may process data regarding various information related to a 3D program to organize EPG, or may display EPG transmitted from the STB 200, etc., to the viewer through the screen. In addition, according to an embodiment of the exemplary embodiments, the display device 300 may separate the stereoscopic video, the sound signal, and the data regarding various information, from received broadcast signals.

In addition, the display device 300 may receive various control commands, such as a channel selection command and a volume control command, from a user through various buttons installed on the display device 300, or an external remote controller.

According to another embodiment of the exemplary embodiments, a separate receiver, e.g., the STB 200 may not be employed. In other words, the receiver 200 may be coupled to the display device 300, and the display device 300 may perform the separation function of the stereoscopic video signal, the sound signal, etc., via reception, demodulation, and inverse multiplexing of a broadcast signal. The STB 200 may also perform a function of controlling output of the stereoscopic video signal and the sound signal.

Hereinafter, the transmission system 100 will be described with regard to an embodiment of the exemplary embodiments.

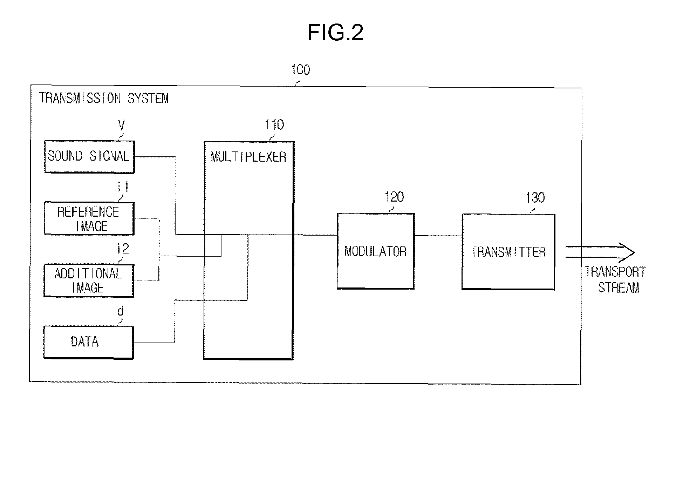

FIG. 2 is a block diagram of the transmission system 100 according to an embodiment of the exemplary embodiments.

For broadcast, as shown in FIG. 2, the transmission system 100 includes a multiplexer 110 to multiplex a sound signal v, image signals i1 and i2, data d, etc., which are input to generate a transport stream, a modulator 120 to modulate the transport stream generated by the multiplexer 110, and a transmitter 130 to transmit the transport stream. Although not shown, according to an embodiment of the exemplary embodiments, the transmission system 100 may further include an amplifier to amplify the transport stream generated by the multiplexer 110. According to another embodiment of the exemplary embodiments, the transmission system 100 may further include an encoding device to encode the sound signal v or the image signals i1 and i2, through an encoder, such as an MPEG-2 encoder, prior to multiplexing the sound signal v or the image signals i1 and i2 by the multiplexer 110.

With reference to FIG. 2, according to an embodiment of the exemplary embodiments, the multiplexer 110 may multiplex the sound signal v, which is an electrical signal regarding music, voice, and other sounds, the reference image signal i1 regarding a reference image, and the additional image signal i2 regarding an additional image, so as to transmit various signals through one communication line. In other words, elementary streams, such as the sound signal v, the reference image signal i1, and the additional image signal i2 are combined to perform program multiplexing. A unit of the multiplexing is a packet.

As described above, the multiplexer 110 multiplexes two video elementary streams of the reference image signal i1 or the additional image signal i2. Any one of the reference image signal i1 and the additional image signal i2 may be used as a left eye image for a stereoscopic video, and the other one may be used as a right eye image for the stereoscopic video. When a channel-based terrestrial 3D TV broadcast service is used, the additional image signal i2 is not allowed to be independently viewed, without the reference image signal i1. Thus, when the STB 200 or the display device 300, which will be described below, may not be used in 3D TV broadcast, only an image corresponding to the reference image signal i1 may be output by the display device 300, and may be viewed.

According to an embodiment of the exemplary embodiments, a reference image format of the reference image signal i1 may have a scanning line number of 1080p, and a pixel number of 1920p. In other words, the reference image signal i1 may have a resolution of 1920 x 1080. In this case, an aspect ratio may be 1.77:1. In addition, according to another embodiment of the exemplary embodiments, a reference image format may have a resolution of 1280x720.

An additional image format of the additional image signal i2 may have the same number of scanning line as the reference image format thereof, or may have half the number of scanning line of the reference image format, e.g., 540p.

In addition, according to another embodiment of the exemplary embodiments, the reference image signal i1 and the additional image signal i2 may be mixed by a stereo mixer, prior to being multiplexed, and may be multiplexed after being encoded.

According to an embodiment of the exemplary embodiments, the multiplexer 110 may multiplex a plurality of programs, e.g., a multi-program as well as a single program.

When the multi-program is multiplexed, it may be possible to implement a multi-channel. The multi-channel refers to a channel that allows one event region to contain a plurality of events, and for example, may allow a plurality of sub-channels divided from one broadcast channel to broadcast a plurality of broadcast programs.

Thus, the multiplexer 110 may generate a transport stream TS (a broadcast wave) for transferring a plurality of events.

The multiplexer 110 may also multiplex information for generation of a stereoscopic video or the data d, regarding various information, such as various information related to programs, using separate channel multiplexing information.

The data d may include a program identification code, which is a program identification (ID) for identifying programs included in a multi-program, channel assignment of each program, a program specific information regarding an elementary stream organization method, a conditional access method, etc., and time information regarding a universal time and a local time.

In particular, the data d may further include a program and a table combination, which is a program and system information protocol (PSIP).

The PSIP is a communication protocol used in an advanced television system committee (ATSC) digital TV standard, and is used to transmit various information regarding a broadcast program, e.g., various information regarding a title or start time of the broadcast program, channel transmission information, etc., from the transmitter 130 to a terminal, such as the STB 200.

In other words, the PSIP may be used to transmit metadata regarding each channel of a broadcast transport stream, e.g., a virtual channel or an event level and to transmit various information for the EPG to obtain information regarding a program to be viewed by a user, or to display various information for selection of the program to be viewed by the user through a display device, etc.

In addition, the PSIP may be used to transmit caption service data, content advertising data, multilingual support information, etc., together with the EPG.

The PSIP includes various tables required to transmit such information.

For example, the PSIP may include a table such as a system time table (STT), a rating region table (RRT), a master guide table (MGT), a virtual channel table (VCT), an event information table (EIT), and an extended text table (ETT).

The STT includes information regarding a current date and time, and the RRT includes information regarding a rating.

The MGT includes packet IDs of all other tables except for the STT. In other words, the MGT functions as a pointer of the other tables in the PSIP. Thus, the MGT may be searched to detect packet IDs of the EIT, or the ETT. In addition, the MGT may also contain information regarding versions of the other tables.

The VCT may have various information regarding a plurality of virtual channels in a physical channel, e.g., a virtual channel name or a virtual channel number, to define each virtual channel and to connect the EIT, which will be described below, to a corresponding virtual channel.

In addition, VCT may include a type of a broadcast program organized in a channel, a channel transfer modulation scheme, a frequency, source_ID information corresponding to an individual broadcast program, etc.

In the case of terrestrial broadcast, the VCT may be a terrestrial virtual channel table (TVCT). When cable broadcast is used, the VCT may be a cable virtual channel table (CVCT).

Thus, when the virtual channel information is not present or is lost in the PSIP, the viewer may not view a broadcast program transmitted through a virtual channel.

In addition, the VCT in a 3D TV may include a stereoscopic program info descriptor.

The stereoscopic program info descriptor is a value that may be added to the VCT or the EIT, so as to indicate whether a transmitted broadcast program is a monoscopic program or a stereoscopic program, and to also indicate a type of the stereoscopic program.

The VCT may allow the STB 200 or the display device 300 to recognize a received program as a 3D program, e.g., stereoscopic video content using the stereoscopic program info descriptor. Then, the STB 200 or the display device 300 may operate according to the recognition result, to reproduce the received program as a stereoscopic video.

The VCT may be added to a program map table (PMT) or the EIT, when the stereoscopic video content is reproduced through the display device 300. which will be described below, such that the viewer may recognize that a currently broadcast program is a 3D program.

Thus, the VCT may allow the viewer to determine that the currently broadcast program is 3D broadcast, but may not allow the viewer to determine that a program to be broadcast in the future is 3D broadcast.

The EIT provides information regarding all events in the VCT, e.g., information regarding a program title or program content. In other words, the EIT includes event information regarding events.

In detail, the EIT includes various information related to a plurality of events, e.g., broadcast programs reproduced by a display device, e.g., information regarding a name of an individual event, e.g., an event title, an event start time, a broadcast length, etc.

In addition, the EIT may include information regarding a plurality of events, e.g., a plurality of programs, as well as information regarding only one event, e.g., information regarding a program, e.g., information regarding a name of an individual event, an event start time, and a broadcast length.

A plurality of EITs may be present and may be assigned for respective physical or virtual channels to transmit information regarding all programs in the physical channels or information regarding all programs in the VCT, e.g., names of a plurality of events, event start times, and broadcast lengths, as described above, to the STB 200 or the display device 300.

For example, in a case of 3D TV broadcast, a plurality of EITs transmitted via the PSIP may include an EIT of a channel through which the reference image signal i1 is transmitted, and an EIT of a channel through which the additional image signal i2 is transmitted. The EIT of the channel, through which the reference image signal i1 is transmitted, may store information regarding all programs in the channel through which the reference image signal i1 is transmitted, e.g., a channel 11, and the EIT of the channel through which the additional image signal i2 is transmitted may store information regarding all programs in the channel through which the additional image signal i2 is transmitted, e.g., a channel 11.1.

Thus, an EPG organizer 240 of the STB 200, which will be described below, may organize EPG using the EIT, such that a user may obtain information regarding a program broadcast through a corresponding channel within a predetermined period of time, e.g., two days.

In detail, the EITs may be organized for respective time zones.

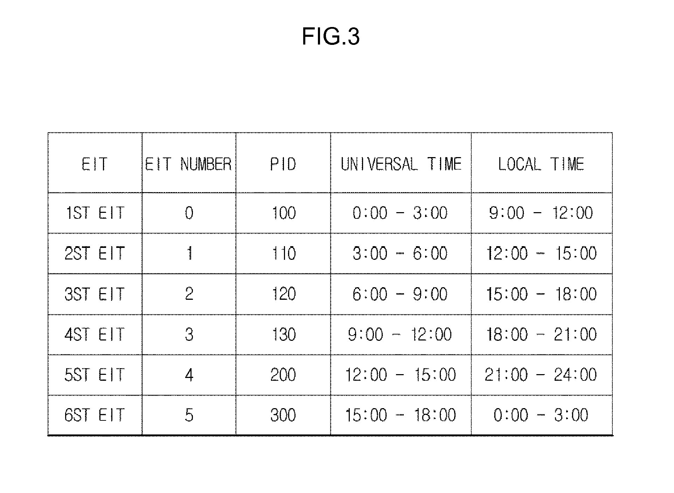

For example, as shown in FIG. 3, an individual EIT included in one EIT includes EPG regarding three hour programs, which are consecutively broadcast from a predetermined time, etc.

FIG. 3 is a table of an example of an EIT.

As shown in FIG. 3, a plurality of EITs, e.g., 6 EITs may be present. Predetermined packet IDs (PIDs) are assigned to the respective EITs, i.e., a first EIT (a 1st EIT of FIG. 3 or an EIT-0) through a sixth EIT (a 6th EIT or an EIT-5). For example, as shown in FIG. 3, a PDI of the 1st EIT (EIT-0) may be 100 and the PDI of the 2nd EIT (EIT-1) may be 110.

As shown in FIG. 3, when the 1st EIT (EIT-0) is used to transmit program information within three hours from a current time, e.g., program information from 0:00 to 3:00, the 2nd EIT belonging to the same EIT of the 1st EIT (EIT-0) may be used to transmit program information within six hours after three hours elapses from a current time, for example, from 3:00 to 6:00.

A maximum of 128 EITs, e.g., the 1st EIT, etc., may be used in the EIT. Thus, information regarding programs to be broadcast for a maximum of 16 days (=128×3 hours/24 hours) may be transmitted to the STB 200 or the display device 300.

As a result, the STB 200 or the display device 300 may receive information regarding a program, per time zone, for a long period of time using the EIT to organize EPG based on the received information such that a viewer may obtain information regarding a currently broadcast program or a broadcast program to be broadcast in the future, based on the organized EPG.

In addition, in the case of 3D TV broadcast, the EIT may further include the aforementioned stereoscopic program info descriptor in order to provide EPG regarding a 3D TV broadcast program.

In particular, according to an embodiment of the exemplary embodiments, the stereoscopic program info descriptor may be included in an EIT of the additional image signal i2 used for stereoscopic video content. Further, the stereoscopic program info descriptor may be included in only an EIT of the additional image signal i2.

A broadcast signal multiplexed by the multiplexer 110 may be modulated by the modulator 120, and then may be transmitted through the transmitter 130, such that a transport stream for 3D TV broadcast is transmitted to the public.

Hereinafter, the STB 200 will be described with regard to an embodiment of the exemplary embodiments.

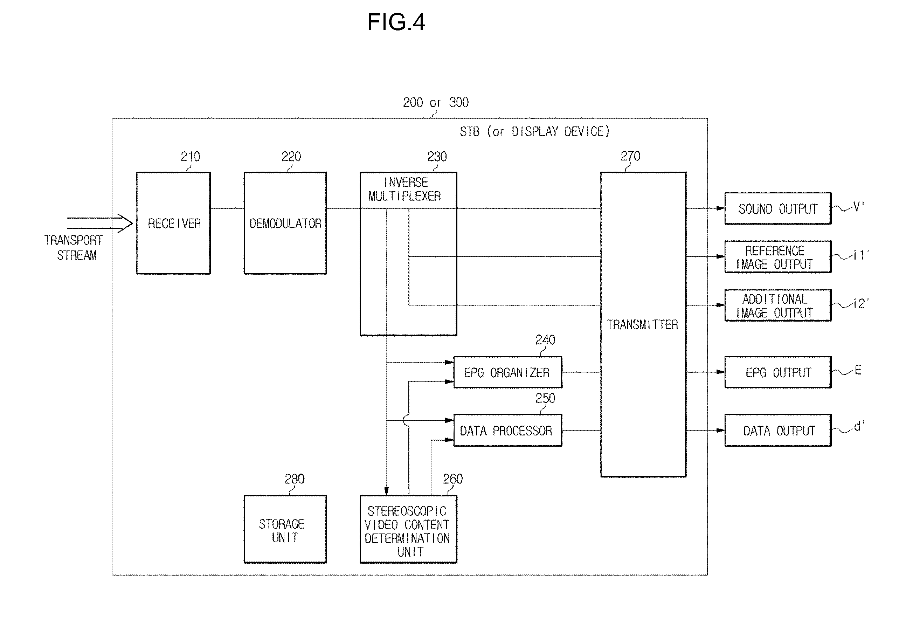

FIG. 4 is a block diagram of the STB 200 according to an embodiment of the exemplary embodiments.

As shown in FIGS. 1 and 4, according to an embodiment of the exemplary embodiments, a transmitted broadcast signal may be received by the STB 200. According to another embodiment of the exemplary embodiments, the transmitted broadcast signal may be received by another element, rather than the STB 200, or may be received by the display device 300.

Hereinafter, a case in which the STB 200 receives the transmitted broadcast signal will be described for clarity with regard to the embodiments of the exemplary embodiments. However, it should be noted that embodiments in which the transmitted broadcast signal is received by another element, rather than the STB 200, e.g., the transmitted broadcast signal is received directly by the display device 300 or the transmitted broadcast signal is received by another receiver, rather than the STB 200, are also within the scope of the embodiments of the exemplary embodiments.

The STB 200 refers to broadcast reception equipment connected to the display device 300, such as a digital TV or a 3D TV.

As shown in FIG. 4, according to an embodiment of the exemplary embodiments, the STB 200 may include a receiver 210, a demodulator 220, an inverse multiplexer 230, an EPG organizer 240, a data processor 250, and a stereoscopic video content determination unit 260.

The receiver 210 receives a transport stream, transmitted from the transmission system 100, and transmits the transport stream to the demodulator 220.

The demodulator 220 demodulates the transport stream to obtain a multiplexed broadcast signal.

The inverse multiplexer 230 extracts a sound signal v', a reference image signal i1', an additional image signal i2', and a signal regarding various data from the multiplexed broadcast signal, and transmits the extracted signals to the display device 300 through a transmitter 270.

The display device 300 may determine whether or not a currently broadcast program is stereoscopic video content, using the aforementioned VCT. Then, as the determination result, when the currently broadcast program is stereoscopic video content, the display device 300 reproduces a stereoscopic video using the reference image signal i1' and the additional image signal i2'.

The determination of whether or not the currently broadcast program is stereoscopic video content may be processed by a separate controller (not shown) in the STB 200.

When the display device 300 determines that the currently broadcast program is stereoscopic video content, the display device 300 may output the reference image signal i1' and the additional image signal i2', and display a stereoscopic video using a predetermined stereoscopic video reproduction image, e.g., a shutter glass method or a polarized glass method. Further, a speaker installed in the display device 300 may output the output signal v', such that a viewer may view and listen to the stereoscopic video content.

When the display device 300 may not process 3D TV broadcast, only the reference image signal i1', among the reference image signal i1' and the additional image signal i2', may be reproduced on a screen.

The EPG organizer 240 generates an EPG notifying the viewer of information regarding programs, using information regarding titles or contents of all programs in the VCT of the EIT of the data d, output from the inverse multiplexer 230.

The EPG organizer 240 of the STB 200 may organize the EPG using the aforementioned TVCT or EIT, so as to notify a user of information regarding programs broadcast within a predetermined period of time, e.g., two days.

In detail, the EPG organizer 240 reads PIDs of events of an EIT for each respective channel, and obtains information regarding a plurality of events that are broadcast or to be broadcast through each channel, e.g., information regarding a start time of a broadcast program and event, with reference to the EIT shown in FIG. 3. In addition, the EPG organizer 240 may arrange and process the obtained information to generate EPG of a predetermined user interface (e.g., GUI).

The EPG generated by the EPG organizer 240 is transmitted to the display device 300 through the transmitter 270.

The EPG generated using this method may be displayed on a screen of the display device 300. The viewer may obtain information regarding a program that is broadcast, or to be broadcast, based on the EPG displayed on the screen of the display device 300.

In addition, the EPG organizer 240 generates the EPG with reference to only EITs of channels that are viewed by the viewer in reality, e.g., a channel of the reference image signal i1.

However, a channel to which the additional image signal i2 is assigned is just a channel that is additionally used for 3D TV broadcast, but not a channel that broadcasts a program, and is not allowed to be independently viewed. Accordingly, the EPG organizer 240 may not generate the EPG with reference to the EIT of the channel of the additional image signal i2. In other words, when the EPG organizer 240 generates the EPG, the EIT of the channel to which the additional image signal i2 is aligned is not used.

As described above, the additional VCT or the additional information is added to the PMT, the EIT, etc., when stereoscopic video content is reproduced, i.e., 3D TV broadcast is begun such that the STB 200 or the display device 300 determines that the currently broadcast image content is stereoscopic video content to perform the 3D TV broadcast. In this case, the determination result of the STB 200 or the display device 300 may be transmitted to the EPG organizer 240. Then, when the EPG organizer 240 generates the EPG, the EPG organizer 240 may add a separate mark or signal, via which the currently broadcast image content is identified as stereoscopic video content, to the EPG. Thus, the viewer may recognize whether or not a currently broadcast program is a 3D program.

According to an embodiment of the exemplary embodiments, the data processor 250 may process various data output from the inverse multiplexer 230, e.g., caption data, etc., so as to display the data on a screen of the display device 300. Then, the data processor 250 may transmit the data to the display device 300 through the transmitter 270. Thus, the display device 300 may output a corresponding caption, etc., to an image on the screen of the display device 300.

According to an embodiment of the exemplary embodiments, as shown in FIG. 4, the STB 200 may include the stereoscopic video content determination unit 260.

The EPG organizer 240 may not determine whether a broadcast program, which is to be broadcast in the future, is a stereoscopic video program. As described above, the additional VCT or the additional information is added to the PMT or the EIT, when stereoscopic video content is reproduced by the display device 300.

The stereoscopic video content determination unit 260 determines whether the broadcast program, which is to be broadcast in the future, is a stereoscopic video program in advance, and transmits the determination result to the display device 300, the EPG organizer 240, the data processor 250, etc., to provide the determination result to the viewer.

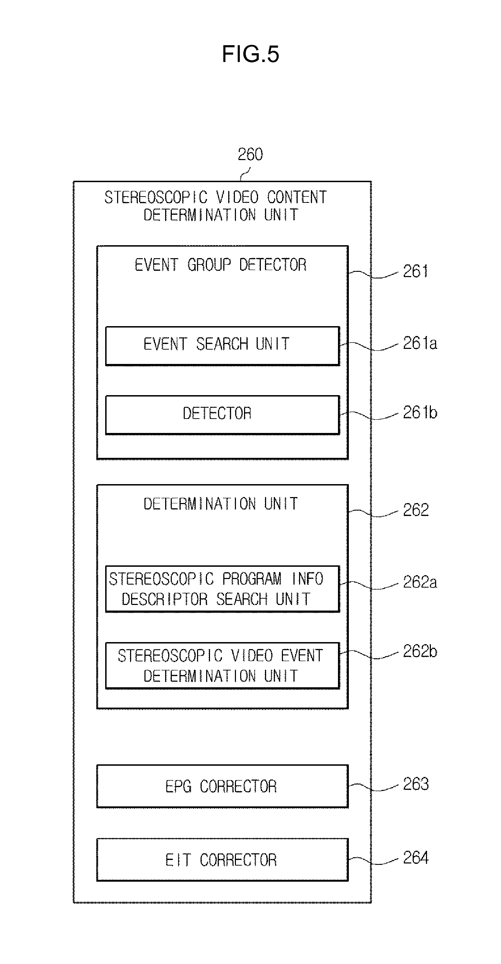

FIG. 5 is a block diagram of the stereoscopic video content determination unit 260 according to an embodiment of the exemplary embodiments.

As shown in FIG. 5, the stereoscopic video content determination unit 260 according to the present embodiment may include an event group detector 261 and a determination unit 262. In addition, the stereoscopic video content determination unit 260 may further include an EPG corrector 263.

The event group detector 261 detects an event group, which is a group of a plurality of events by extracting a plurality of events based on an EIT, which is received by the receiver 210, inverse multiplexed by the inverse multiplexer 230, and extracted. The event group detector 261 collects an event, corresponding to a predetermined condition, among the plurality of events.

According to an embodiment of the exemplary embodiments, the predetermined condition corresponds to a case in which channel information of a plurality of events is different, and event identifiers of the events, e.g., event titles or event time information of the events are the same.

In addition, the event group refers to a group of a plurality of events corresponding to the predetermined condition, e.g., a plurality of events having different channel information and the same event identifier.

The event time information may include information regarding an event start time, an event length, i.e., a broadcast time, etc.

As shown in FIG. 5, according to an embodiment of the exemplary embodiments, the event group detector 261 may include an event search unit 261a and a detector 261b.

The event search unit 261a may read the EIT shown in FIG. 3, and detect events having the same PID, based on the EIT. In other words, the event search unit 261a detects a plurality of events having the same PIDs, from a plurality of EITs, corresponding to a plurality of channels.

In other words, the event search unit 261a may detect at least one event of a predetermined time zone from the EIT.

For example, the event search unit 261a may detect only events having a PID of 100, i.e., events corresponding to the 1st EIT (EIT-0) from each of EITs corresponding to the respective channels, as shown in FIG. 3. In other words, the event search unit 261a may detect only the events having a PID of 100 to obtain a plurality of events having the same PID, the number of which corresponds to the total number of the EITs, as shown in FIG. 3.

The event search unit 261a may detect a plurality of events with regard to each PID. In this case, the events may be detected among only events having specific PIDs, according to a predefined setting, e.g., only the events having PIDs of 100, 110, and 120, as shown in FIG. 3 Alternatively, a plurality of events having the same PID may be detected with regard to all received PIDs.

As a result, a plurality of events with respect to each of various PIDs, i.e., events of various zones may be detected and obtained through the event search unit 261a.

The detector 261b may detect the event group having different channel information, and the same event identifier among the plurality of events detected by the event search unit 261a.

In other words, the event group, i.e., the plurality of events having different channel information and the same event identifier, may be found by searching for events that are output through different channels due to different channel names, channel numbers, or source IDs, but have the same event identifier, e.g., the same event title, event start time, or event length.

In this case, according to an embodiment of the exemplary embodiments, a source ID may be checked in order to determine whether channels are different.

According to an embodiment of the exemplary embodiments, as described above, the determination unit 262 shown in FIG. 5 may determine whether the detected event group is related to stereoscopic video content.

Referring to FIG. 5, according to an embodiment of the exemplary embodiments, the determination unit 262 may include a stereoscopic program info descriptor search unit 262a and a stereoscopic video event determination unit 262b.

The stereoscopic program info descriptor search unit 262a reads information regarding each event, belonging to the aforementioned event group, to search for the stereoscopic program info descriptor.

In other words, the stereoscopic program info descriptor search unit 262a detects whether or not there is a stereoscopic program info descriptor of at least one event among each event belonging to the event group.

According to an embodiment of the exemplary embodiments, the stereoscopic program info descriptor search unit 262a may read, for example, an EIT in order to search for the stereoscopic program info descriptor.

For example, as described above, the EIT of the additional image signal i2 may include the stereoscopic program info descriptor. In this case, the stereoscopic program info descriptor search unit 262a may read a plurality of EITs related to the event groups, and may detect the stereoscopic program info descriptor from event information regarding an event output as the additional image signal i2 among a plurality of event groups, e.g., the EIT.

As the search result of the stereoscopic program info descriptor search unit 262a, when a stereoscopic program info descriptor of at least one event is detected, an event group including the event in which a stereoscopic program info descriptor is detected, may be determined as the event group related to the stereoscopic video content.

When the stereoscopic program info descriptor is not detected from event information regarding an event belonging to one event group, the stereoscopic video event determination unit 262b determines that the event group is not stereoscopic video content.

According to an embodiment of the present exemplary embodiments, the determination unit 262 may repeat the aforementioned process on all event groups detected by the event group detector 261, to determine whether or not each event group is stereoscopic video content, and may store the determination result.

When an event group is stereoscopic video content, one event belonging to the event group, i.e., an image corresponding to a program may be output as the reference image signal i1' and another event, i.e., an image corresponding to a program may be output as the additional image signal i2'. In other words, a channel corresponding to one event may be a reference image channel through which a reference image is output, and a channel corresponding to another event belonging to the same event group corresponding to the one event may be an additional image channel through which an additional image is output. The reference image channel may be, for example, a reference channel (an N channel) through which a viewer may view a broadcast program. The additional image channel may be an additional channel (an N.1 channel) through which the viewer may not independently view a program, but may view the program when the additional image channel and the reference image channel are combined or cross each other using a predetermined stereoscopic video display method, e.g., a polarized glass method or a shutter glass method.

According to an embodiment of the exemplary embodiments, an event in which a stereoscopic program info descriptor is detected may be determined as an event of an additional imager. In this case, an event in which a stereoscopic program info descriptor corresponding to another event belonging to the same event group, e.g., an event corresponding to the additional image signal i2' is not detected, may be determined as an event of the reference image signal i1'.

Of course, according to another embodiment of the exemplary embodiments, an event in which a stereoscopic program info descriptor is detected, may be determined as an event of a reference image.

In conclusion, whether or not a program, i.e., an event or event group to be broadcast in the future is a broadcast program serving as a stereoscopic video may be determined through the event group detector 261 and the determination unit 262. The determination result, as information regarding stereoscopic video content, may be stored in a separate storage unit 280, e.g., a memory device in the STB 200.

In addition, the event group detector 261 and the determination unit 262 may repeat the aforementioned process on a plurality of events, corresponding to a plurality of PIDs based on each EIT. Thus, whether a plurality of events of each time zone corresponds to a stereoscopic video may be determined.

Accordingly, whether or not all events within a predetermined period of time, e.g., a maximum of 16 days are stereoscopic video contents, i.e., 3D programs, may be determined.

According to an embodiment of the exemplary embodiments, the determination result may be used by the EPG corrector 263 or the EIT corrector 264, which will be described below, or may be transmitted to the display device 300 through the transmitter 270.

When the display device 300 directly receives the determination result, the display device 300 may correct and update EPG, and may display the EPG directly to a user.

According to an embodiment of the exemplary embodiments, as shown in FIG. 5, the stereoscopic video content determination unit 260 may further include the EPG corrector 263.

As described above, when a program to be broadcast in the future is determined as a broadcast program serving as a stereoscopic video, the EPG corrector 263 transmits the determination result, i.e., information regarding the determined stereoscopic video content to the EPG organizer 240, and the EPG organizer 240 corrects and updates the EPG according to the determination result. Thus, the STB 200 or the display device 300 may reflect the determination result in the EPG, and may display the EPG to the user.

According to another embodiment of the exemplary embodiments, as shown in FIG. 5, the stereoscopic video content determination unit 260 may further include the EIT corrector 264.

The EIT corrector 264 may correct and update some of contents of the EIT, which is inverse multiplexed and output by the inverse multiplexer 230, and is stored in a storage unit (e.g., the storage unit 280) of the STB 200 or the display device 300.

In particular, the EIT corrector 264 may correct the EIT based on information regarding stereoscopic video content, which is output from the determination unit 262 or stored in the storage unit 280, such that the EPG organizer 240 generates EPG based on the corrected EIT.

The user may recognize whether or not a broadcast program to be broadcast in the future is a stereoscopic video, with reference to the EPG output on the screen of the display device 300 through the EPG corrector 263 or the EIT corrector 264.

Thus, when the user wants to watch reservation or record reservation of the broadcast program to be broadcast in the future, the user may recognize whether or not the corresponding program is a 3D program. Thus, the user may determine whether or not to watch reservation or record reservation of the corresponding program proceeds, or may select a watch reservation method or record reservation method appropriate for the corresponding program.

According to the above-described embodiments of the exemplary embodiments, whether or not a program to be broadcast is a 3D program, i.e., stereoscopic video content without the aforementioned TVCT or CVCT, may be determined. Thus, as long as the virtual channel information is added to the PMT, etc., at a time when the 3D program is begun, whether or not a program to be broadcast in the future is a 3D program may be determined in advance.

According to another embodiment of the exemplary embodiments, some elements of the aforementioned elements 210 through 280 may be formed on the STB 200, and other elements may be formed on the display device 300. In other words, according to another embodiment of the exemplary embodiments, the display device 300 may include at least one of the aforementioned elements 210 through 280

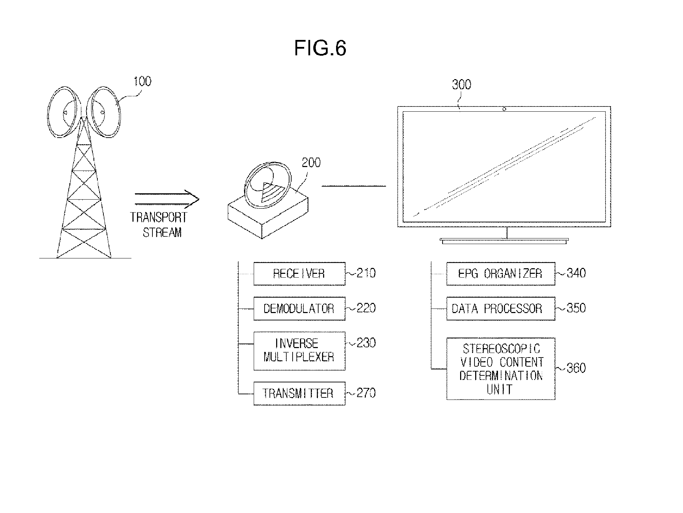

FIG. 6 is a diagram of structures of a STB and a display device which are respectively designated by reference numerals 200 and 300 according to another embodiment of the exemplary embodiments.

For example, as shown in FIG. 6, according to another embodiment of the exemplary embodiments, the STB 200 may include the receiver 210 to receive a transport stream, the demodulator 220 to demodulate a received signal, the inverse multiplexer 230 to inverse multiplex the demodulated signal to separate the image signals i1' and i2' or various data d', and the transmitter 270 to transmit various inverse multiplexed signals to the display device 300. The display device 300 may display the image signals i1' and i2' transmitted from the STB 200 on a screen, and may include an EPG organizer 340 to organize an EPG using the data d', e.g., an EIT, etc., a data processor 350 to process the various data d' to generate and display, e.g., a caption, etc., and a stereoscopic video content determination unit 360 to determine whether or not a program to be broadcast in the future is a stereoscopic video program, i.e., 3D TV broadcast program.

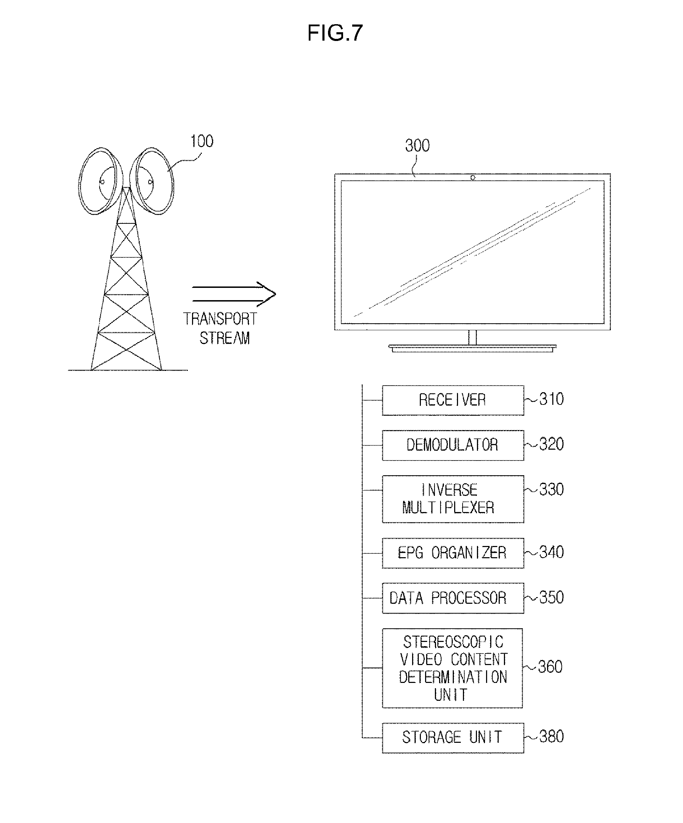

In addition, according to another embodiment of the exemplary embodiments, as shown in FIG. 7, the display device 300 may include all the aforementioned elements.

FIG. 7 is a diagram of a structure of a display deceive which is designated by reference numeral 300 according to another embodiment of the exemplary embodiments.

As shown in FIG. 7, according to the present embodiment of the exemplary embodiments, the display device 300 may include a receiver 310 to receive a transport stream from the transmission system 100, a demodulator 320 to demodulate a received signal, an inverse multiplexer 330 to inverse multiplex the demodulated signal to separate the image signals i1' and i2' or the various data d', an EPG organizer 340 to organize an EPG using an EIT or the like, a data processor 350 to process the various data d', the stereoscopic video content determination unit 360 to determine whether or not a program to be broadcast in the future is a stereoscopic video program, and a storage unit 380 to store an EPG, etc.

According to another embodiment of the exemplary embodiments, the STB 200 and the display device 300 may include some elements, e.g., the stereoscopic video content determination unit 260, the EPG organizer 240, etc.

In addition, according to another embodiment of the exemplary embodiments, some elements of the aforementioned elements 210 through 280 may be formed on a device, except for the STB 200 or the display device 300, e.g., a separate information processor, etc.

For example, the separate information processor is provided to transmit and receive data to and from the STB 200 and/or the display device 300 through a wired or wireless communication network, and the stereoscopic video content determination unit 260 and the storage unit 280 may be formed on the separate information processor. In addition, according to embodiments of the exemplary embodiments, the information processor may be formed between the STB 200 and the display device 300 to receive various images, sounds, or other data transmitted from the STB 200, and to transmit them to the display device 300.

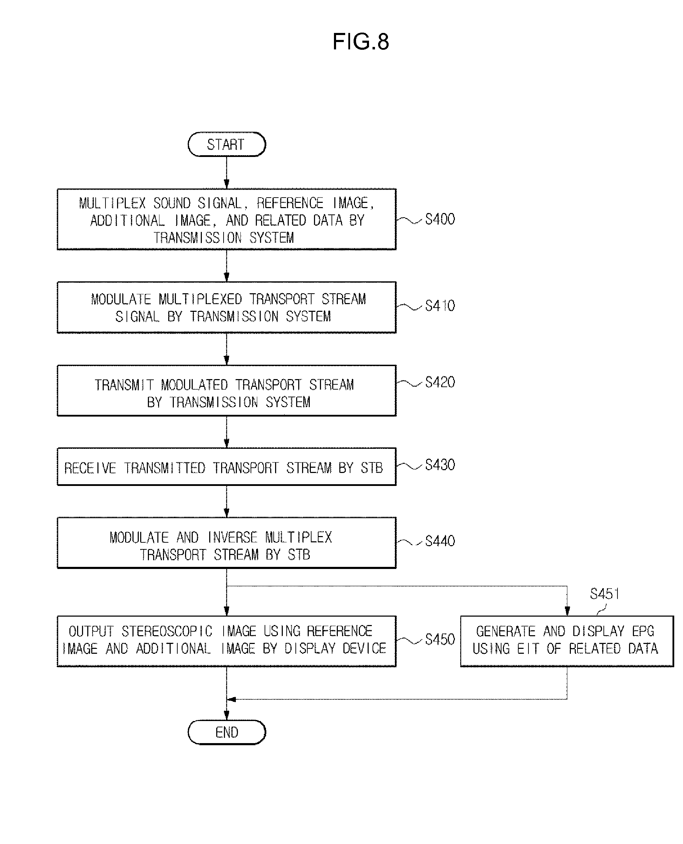

Hereinafter, 3D TV broadcast process will be described with regard to an embodiment of the exemplary embodiments with reference to FIG. 8.

FIG. 8 is a flowchart of 3D TV broadcast process according to an embodiment of the exemplary embodiments.

As shown in FIG. 8, according to the present embodiment, in a 3D TV broadcast, the transmission system 100 multiplexes the sound signal v, the reference image signal i1, the additional image signal i2, and data d to generate one transport stream (S400). The multiplexed transport stream is modulated by the modulator 120 of the transmission system 100 (S410), and is transmitted by the transmitter 130 (S420). In this case, the transport stream may be terrestrially transmitted to the STB 200 or the display device 300, or may be transmitted to the STB 200 or the display device 300 through a cable.

In this case, the data d may be transmitted according to a PSIP, and the PSIP may include a table such as an STT, an RRT, an MGT, a VCT, an EIT, and an ETT, etc. In this case, when the transport stream is terrestrially transmitted through a ground wave, the VCT may be a TVCT. When the transport stream is transmitted through a cable, the VCT may be a CVCT.

In addition, each EIT may include information regarding a plurality of reference images v1 and a plurality of additional images v2 corresponding thereto, and one EIT may include information regarding a plurality of events, i.e., a plurality of programs.

When the transport stream for 3D TV broadcast is terrestrially transmitted or is transmitted through a cable, the STB 200 or the display device 300 according to another embodiment of the exemplary embodiment receives the transmitted transport stream (S430), and demodulates and inverse multiplexes the transport stream to extract the sound signal v', the reference image signal i1', the additional image signal i2', and the various data d' (S440).

In addition, the STB 200 or the display device 300 may generate EPG from the various data d' using the EIT or the like (S451).

Then, the display device 300 distinguishes the reference image signal i1' and the additional image signal i2' with reference to the data d', e.g., the VCT and displays the reference image signal i1' and the additional image signal i2' using a stereoscopic video reproduction method set by the VCT, e.g., a shutter glass method or a polarized glass method (S450).

The display device 300 may display the generated EPG according to user manipulation (S451). According to an embodiment of the exemplary embodiments, before or after the EPG is generated or displayed, whether or not a program to be broadcast in the future is stereoscopic video content may be determined, based on the various data d' received and extracted in operations S430 and S440.

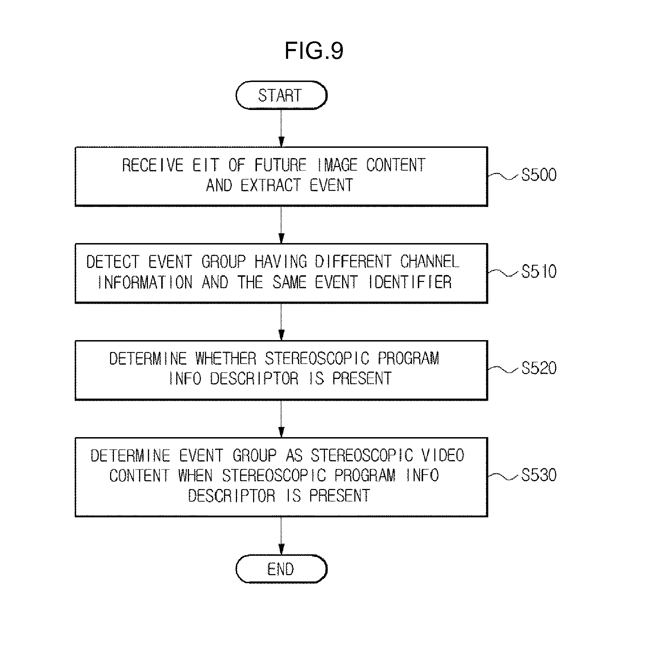

Hereinafter, a method of determining stereoscopic image content will be described with regard to an embodiment of the exemplary embodiments with reference to FIGS. 9 through 11.

FIG. 9 is a flowchart of a method of determining stereoscopic image content according to an embodiment of the exemplary embodiments.

According to the present embodiment, as shown in FIG. 9, the method of determining stereoscopic image content includes receiving an EIT of image content to be broadcast in the future, and then extracting a plurality of events based on the received EIT (S500).

As described above, the EIT is transmitted to the STB 200 or the display device 300 according to a PSIP, and is extracted by the demodulator 220 and the inverse multiplexer 230 of the STB 200, or the display device 300.

The STB 200 or the display device 300 may receive all EITs transmitted to a transmission system, such as an EIT of future broadcast, as well as an EIT of current broadcast.

Then, the stereoscopic video content determination unit 260 extracts a plurality of events based on the received EIT. To this end, the event search unit 261a may read a plurality of EITs to extract a plurality of events having the same PID, from the plurality of EITs.

For example, as shown in FIG. 3, a plurality of events having the same PID is extracted according to a PID assigned to the 1st EIT (EIT-0), the 2nd EIT (EIT-1), etc.

A plurality of events having the same PID is extracted for each PID, to extract a plurality of events in a predetermined time zone.

Then, as described above, an event group is detected from the plurality of extracted events (S510). The event group refers to a combination of groups, including events having different channel information and the same event identifier.

In addition, the same event identifier refers to the same event ID, e.g., the same event title, the same event start time, or the same event length. According to an embodiment of the exemplary embodiments, a source ID may be checked in order to determine whether channels are different in operation S510.

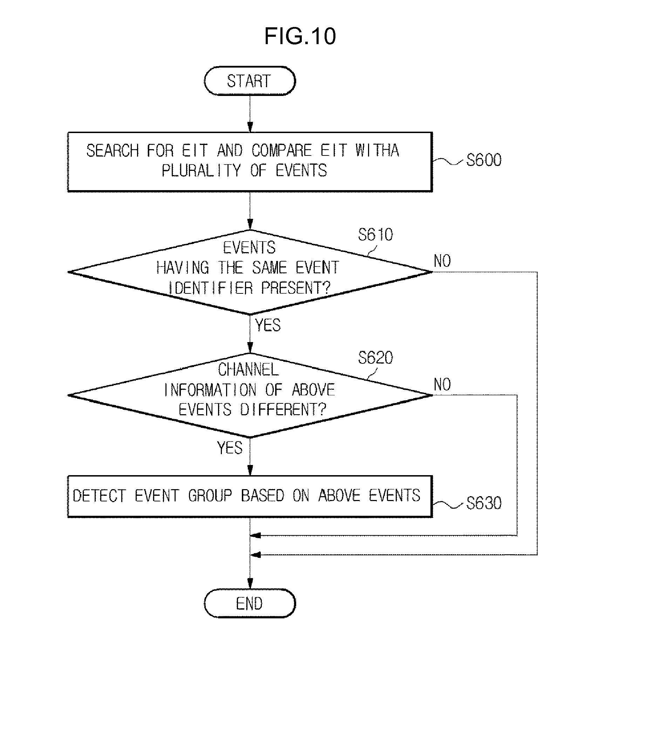

FIG. 10 is a flowchart of a process of detecting an event group in a method of determining stereoscopic video content according to an embodiment of the exemplary embodiments.

According to the present embodiment, as shown in FIG. 10, EITs are searched for and is compared with the plurality of extracted events in order to detect an event group (S600).

Whether or not there are events having the same event identifier, e.g., the same event title, the same event start time, or the event length, is determined (S610). When there are the events having the same event identifier, whether or not channel information between the events having the same event identifier is different is determined (S620).

When the detected events have the same event identifier and different channel information, the detected events are considered as one event group, to detect an event group (S630).

After the event group is detected, event information regarding each event in the event group is searched for, and whether or not a stereoscopic program info descriptor is present in at least one event information of the found event information, is determined (S520).

In this case, when the stereoscopic program info descriptor is present in at least one event in the event group, the event group is determined as stereoscopic video content (S530).

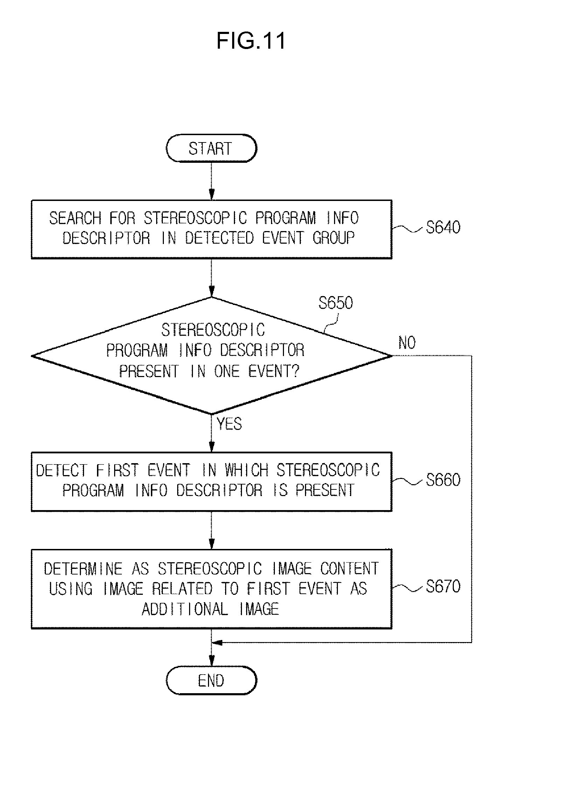

FIG. 11 is a flowchart of a method of determining stereoscopic video content by detecting a stereoscopic program info descriptor in a method of determining stereoscopic video content according to an embodiment of the exemplary embodiments.

According to the present embodiment, as shown in FIG. 11, a stereoscopic program info descriptor is searched for from each of events in each of detected event groups, in order to detect the stereoscopic program info descriptor (S640).

According to an embodiment of the exemplary embodiments, in order to search for the stereoscopic program info descriptor, an EIT may be read.

Then, whether or not a stereoscopic program info descriptor of one event in an event group is present in an EIT of one event is determined (S650).

According to an embodiment of the exemplary embodiments, when the stereoscopic program info descriptor is present in an EIT of one event belonging to a predetermined event group, the corresponding event may be detected as a first event (S660) and the predetermined event group may be determined as stereoscopic video contents using an image of a first event as the additional image signal i2' (S670). As described above, according to an embodiment of the exemplary embodiments, the stereoscopic program info descriptor is detected from an EIT of an event output as the additional image signal i2'.

In other words, according to an embodiment of the exemplary embodiments, when an event group is determined as stereoscopic video content, an image, corresponding to an event in which a stereoscopic program info descriptor is not present among events belonging, the event group may be output as the reference image signal i1', and an image corresponding to another event in which a stereoscopic program info descriptor is present may be outputs as the additional image signal i2'.

Of course, according to embodiments of the exemplary embodiments, an image related to the first event may be determined as the reference image signal i1'.

According to the determination result, the EPG may be corrected using the aforementioned EPG organizer 240, etc., such that a viewer may recognize whether a program to be broadcast in the future is a program to be broadcast as a stereoscopic video.

In another embodiment of the exemplary embodiments, any of the stereoscopic video content determination unit 260 and the stereoscopic video content determination unit 360 may include at least one of a processor, a circuit, or a hardware module for performing their respective functions.

Thus, in conclusion, according to the embodiments of the exemplary embodiments, whether or not a program to be broadcast in the future is 3D TV broadcast may be determined independently from a channel.

In addition, the viewer may easily determine whether the program to be broadcast in the future is 3D TV broadcast, in advance.

Accordingly, the viewer may perform additional manipulation for watch reservation in order to correspond to 3D TV broadcast, and may change settings, or perform additional manipulation on the STB 200 or the display device 300 or a video recorder connected thereto, e.g., a video, a personal computer, etc., for broadcast record reservation in order to correspond to 3D TV broadcast.

As is apparent from the above description, whether or not various image contents to be received and reproduced in the future is stereoscopic video content may be determined via a method of determining a stereoscopic video, and a display device and STB for performing the method.

In particular, when whether or not content is a stereoscopic video may be determined only after the stereoscopic video content is reproduced, because information regarding whether or not the content is the stereoscopic video, e.g., virtual channel information, is provided at a time when the stereoscopic video content is begun, as in an ATSC method, whether or not image content to be provided in the future is stereoscopic video content, may be determined.

In addition, an EPG may be corrected by adding additional information regarding 3D broadcast to the EPG, such that a viewer may easily recognize whether future broadcast is a general broadcast or a 3D broadcast.

Thus, the viewer may recognize whether a program to be broadcast in the future is a general broadcast or a 3D broadcast. In addition, the viewer may determine the program to be broadcast in advance, and may perform watch reservation or record reservation.

Although a few embodiments of the exemplary embodiments have been shown and described, it would be appreciated by those skilled in the art that changes may be made in these embodiments without departing from the principles and spirit of the exemplary embodiments, the scope of which is defined in the claims and their equivalents.

## Claims

1. A method of determining stereoscopic video content based on an event information table (EIT) related to image content, the method comprising:
receiving the EIT of future image content;
extracting a plurality of events based on the EIT;
detecting an event group having different channel information and the same event identifier among the extracted events;
reading event information regarding events belonging to the event group to determine whether a stereoscopic program info descriptor is present in at least one event information; and
determining that the event group is an event group of stereoscopic video content when the stereoscopic program info descriptor is present in the event information.

2. The method according to claim 1, wherein the event identifier is at least one of an event title and an event time information.

3. The method according to claim 1, wherein the extracting comprises extracting events having a same packet identifier (PID) by searching for the EIT.

4. The method according to claim 1, wherein the determining comprises:
determining an event in which the stereoscopic program info descriptor is not present as a reference event reproduced as a reference image among a plurality of events of the event group; and
determining an event in which the stereoscopic program info descriptor is present as an additional event reproduced as an additional image additionally used in the reference image among the plurality of events of the event group.

5. The method according to claim 1, further comprising correcting electronic program guide information (EPG) or the received EIT based on information regarding the determined stereoscopic video content.

6. A display device comprising:
an event group detector to extract a plurality of events based on an event information table (EIT) of future image content and to detect an event group having different channel information and the same event identifier among the extracted events; and
a determination unit to read event information regarding events belonging to the event group to determine whether a stereoscopic program info descriptor is present in at least one event information and to determine that the event group is an event group of stereoscopic video content when the stereoscopic program info descriptor is present in the event information.

7. The display device according to claim 6, wherein the event identifier is at least one of an event title and an event time information.

8. The display device according to claim 6, wherein the event group detector extracts events having a same packet identifier (PID) by searching for the EIT.

9. The display device according to claim 6, wherein the determination unit determines an event in which the stereoscopic program info descriptor is not present as a reference event reproduced as a reference image among a plurality of events of the event group, and determines an event in which the stereoscopic program info descriptor is present as an additional event additionally used in the reference image among the plurality of events of the event group.

10. The display device according to claim 6, further comprising an electronic program guide information (EPG) corrector to correct EPG based on information regarding the determined stereoscopic video content.

11. The display device according to claim 6, further comprising an EIT corrector to correct the received EIT based on information regarding the determined stereoscopic video content.
